# EUROPEAN PATENT APPLICATION

(11) **EP 0 854 325 A2**
(43) Date of publication of application: **22.07.1998**
(21) Application number: 98300423.5
(22) Date of filing: 20.01.1998
(51) Int. Cl.: F24D 3/14

(54) **A heat exchanger**

(30) Priority: 20.01.1997 GB 9701080
(71) Applicant: Lipscomb, John, Radlett, Herts WD7 8HR (GB)
(72) Inventor: Lipscomb, John, Radlett, Herts WD7 8HR (GB)
(74) Representative: Lawrence, Malcolm Graham

(57) **Abstract**

A heat exchanger kit 8 in modular form for installation, together with a length of a plastics material tube 18 for carrying a flow of heat exchange liquid, sub-surfacially to an enclosure-defining member of a building or beneath a ground surface, said tube 18 to be provided as a separate additional component to form a completed installation, the modules 11 of the heat exchanger 8 being in the form of sheet- or block-form self-supporting bodies of solid thermal insulation material 10 each having an upwardly-facing planar surface 32 at least the major part of which carries a thin thermally-transmissive layer 12 spread thereover, one or more channels 14 being formed in said thermally-transmissive layer carrying surface 32 for location of a portion of the length of the plastics material tube 18 in heat transfer relationship with the thermally-transmissive layer 12, the channels 18 each traversing a respective module 11 from one edge to another or from a point on one edge to a different point on the same edge and the modules 11 having generally the same thickness as each other and being configured for abutment one with another in a co-planar heat exchanger assembly in which at least the majority of the respective channels 14 communicate one with another to form a continuous recess in which the plastics material tube 18 may be received in said heat transfer relationship with the thermally-transmissive layer 12 and retained to form a heat exchange liquid flow path between flow input 15 and flow output 17 ends of the installation separated by the aggregate of the communicating module channels, the bodies of thermal insulation material 10 supporting the plastics tube without deflection of the thermally-transmissive layer carrying surface 32 in the completed installation, the thermally-transmissive layer 12 being in heat-transmissive contact with the plastics material tube 18 over substantially the entire length of the flow path and the thermally-transmissive layer 12 when the heat exchanger is installed being in thermally substantially uninterrupted direct or indirect interfacial contact with the fabric of the enclosure-defining member of the building 16 or with material of a natural or artificial ground stratum.

## Description

The present invention relates to a heat exchanger in modular form for installation sub-surfacially to an enclosure defining member of a building, for example for use in an underfloor heating and/or cooling system or in a heating and/or cooling system recessed in a cavity behind a wall in homes, schools, offices, hospitals etc.

There exists known forms of systems for use in underfloor heating and of heating systems for installation in walls.

One known form of underfloor central heating system comprises an electric heating cable, consisting of an electric heating wire sheathed in a plastics tube, which is embedded in a screed of concrete forming a floor of a building.

Another known form of underfloor central heating system comprises a heatable tube, made either of metal or a plastics material, which is embedded in a concrete screed as the floor is built or in a concrete pug laid underneath the floor.

In both these known systems, the concrete screed or pug in which the heating cable or heated water tube is embedded forms a large storage-type heating system.

However, these known systems suffer from a major disadvantage, particularly in the installation thereof, in that the heating cable or heated water tube is laid on a sub-floor from a reel or coil during installation, thus resulting in high labour costs, and requiring considerable care and skill on the part of the persons installing the system. The concrete screed is subsequently poured over the sub-floor. In other systems there is usually a need for anchor points embedded in the sub-floor, thus weakening the effectiveness of the damp-proof membrane at these points.

A further known system comprises a modular heating and/or cooling system wherein the modules comprise a plastics material tubing supported by a thermally conductive support means.

However, this system suffers a major disadvantage in that many joints are needed between the modules and the remainder of the heating and/or cooling systems thus requiring considerable care and skill on the part of the persons installing the system and increasing the risk of leaks post-installation, the rectification of which necessarily involving substantial cost and disruption.

Furthermore, it is often the case in known systems that the inherent weight of the system causes contact to be lost between the system and the lower surface of the floor, thus resulting in a high loss of heating efficiency.

It is an object of the present invention to provide a heat exchanger which is both cheap and easy to manufacture and install.

It is another object of the present invention to provide a heat exchanger which is easy to handle, store and transport.

It is a further object of the present invention to provide a heat exchanger which facilitates the installation of a heating and/or cooling system with the minimum necessary joints.

It is yet another object of the present invention to provide a heat exchanger which is easy to install in areas with restricted access.

Accordingly, the present invention provides a heat exchanger kit in modular form for installation, together with a length of a plastics material tube for carrying a flow of heat exchange liquid, sub-surfacially to an enclosure-defining member of a building or beneath a ground surface, said tube to be provided as a separate additional component to form a completed installation, the modules of the heat exchanger being in the form of sheet- or block-form self-supporting bodies of solid thermal insulation material each having an upwardly-facing planar surface at least the major part of which carries a thin thermally-transmissive layer spread thereover, one or more channels being formed in said thermally-transmissive layer carrying surface for location of a portion of the length of the plastics material tube in heat transfer relationship with the thermally-transmissive layer, the channels each traversing a respective module from one edge to another or from a point on one edge to a different point on the same edge and the modules having generally the same thickness as each other and being configured for abutment one with another in a co-planar heat exchanger assembly in which at least the majority of the respective channels communicate one with another to form a continuous recess in which the plastics material tube may be received in said heat transfer relationship with the thermally-transmissive layer and retained to form a heat exchange liquid flow path between flow input and flow output ends of the installation separated by the aggregate of the communicating module channels, the bodies of thermal insulation material supporting the plastics tube without deflection of the thermally-transmissive layer carrying surface in the completed installation, the thermally-transmissive layer being in heat-transmissive contact with the plastics material tube over substantially the entire length of the flow path and the thermally-transmissive layer when the heat exchanger is installed being in thermally substantially uninterrupted direct or indirect interfacial contact with the fabric of the enclosure-defining member of the building or with material of a natural or artificial ground stratum. Of course, it is not strictly essential that the modules should have generally the same thickness as each other so long as the thermally-transmissive carrying surfaces are co-planar; there might, for example, be a case for providing a special module having an increased thickness of insulating material where, in the context of a floor, the module is to be supported upon grounds attached to each of a pair of unusually widely spaced joists.

The thin thermally-transmissive layer may comprise any material that will adhere to the upper surface of the modules in a thin layer and that will efficiently conduct heat from the tube to the fabric of the enclosure-defining member of the building. Examples include foils such as thin sheets of metal (eg tinfoil), layers of metallic paint or layers produced by electroplating of metal.

It will be appreciated that the thermally-transmissive layer may be in underlying relationship with the tube, that there may be a layer of thermally-transmissive material over the tube (for example forming an upwardly facing thermally-transmissive surface of the channel), or a combination of these arrangements.

In a preferred embodiment, the heat transmissive layer covers substantially all of the upwardly facing planer surfaces of the modules of the heat exchanger.

In a further preferred embodiment, the thin thermally-transmissive layer extends into the majority of the channels in the modules of the heat exchanger such that the plastics material tube carrying heat exchange liquid is in an overlaying relationship with the thermally-transmissive layer over the majority of its passage through the modules of the heat exchanger.

The plastics material tube is preferably made of polyvinyl chloride or perhaps low density polyethylene or propylene. Flexible small bore copper or copper alloy tube may be used as an alternative, the practical requirement being deformation to locate the tube in the recess.

The tube diameter should be such that the formation for air locks in the installed heat exchanger tube is minimised. Accordingly, a small bore tube is preferred, although any internal diameter of from 5 to 30mm may be used, preferably 7 to 22mm such as, for example, 7 to 10mm internal diameter.

Also in accordance with the present invention there is provided a method of installing sub-surfacially a heat exchanger in modular form, the modules of the heat exchanger being in the form of sheet- or block-form self-supporting bodies of solid thermal insulation material each having an upwardly-facing planar surface at least the major part of which carries a thin thermally-transmissive layer spread thereover, one or more channels being formed in said thermally-transmissive layer carrying surface for location of a length of tube for carrying a flow of heat exchange liquid in overlying relationship with the thermally-transmissive layer, said tube to be provided as a separate additional component to form a completed installation, the channels each traversing a respective module from one edge to another or from a point on one edge to a different point on the same edge and the modules having generally the same thickness as each other, the method comprising configuring the modules in a co-planar heat exchanger arrangement in which at least the majority of the respective channels communicate one with another to form a continuous recess in which the tube may be received in overlying relationship with the thermally-transmissive layer and retained to form a heat exchange liquid flow path between flow input and flow output ends of the installation separated by the aggregate of the communicating module channels, the bodies of thermal insulation material supporting the tube without deflection of the thermally-transmissive layer carrying surface in the completed installation, the thermally-transmissive layer being in heat-transmissive contact with the tube over substantially the entire length of the flow path and the modules being installed such that the thermally-transmissive layer is in thermally substantially uninterrupted direct or indirect interfacial contact with the fabric of a body defining the surface.

In an embodiment, the solid thermal insulation material is foamed polystyrene (eg extruded or expanded polystyrene) which affords an extremely lightweight and cheap construction which is easy to handle, store and transport. However, because polystyrene is ordinarily combustible, it is preferred that there should be an addition of a fire-retardant additive to the polystyrene foam. Polyurethane is a preferred insulation material because of its natural resistance to combustion and melting. Compressed resin-based mineral wool bat might also be used although this would also require combustion-retardance and would in any event be difficult to form with channels. Preferably, the solid thermal insulation material is between 1.0m and 3.0m long and between 0.5m and 1.5m wide and is most preferably 1.5m long and 1.0m wide. Preferably also the solid thermal insulation material is between 15 and 50mm thick, more preferably 20 to 25mm thick.

In preferred embodiments, the thermally transmissive layer is a foil, (preferably copper or aluminium) provided as a sheet of metallic foil or as a layer of thermally-transmissive metallic paint. Copper offers the advantage of high heat transmissibility but is not widely available as sheets or paint and is thus expensive. The heat transmissive layer accordingly is preferably aluminium (which is cheap, flexible and also has excellent heat transmissive properties).

Preferably, the foil layer (eg aluminium foil or paint) has a thickness of between 1 x 10⁻² mm and 1 x 10⁻¹ mm, more preferably between 2 x 10⁻² mm and 5 x 10⁻² mm and most preferably between 3 x 10⁻² mm and 4 x 10⁻² mm.

Metallic sheet foil is preferably adhered with a suitable adhesive to the surfaces of the solid thermal insulation material and more preferably it has a suitable adhesive pre-coated on one surface thereof.

Suitable metallic paints include any commercially available paints which have thermally conductive properties. The metallic paint may be applied by any conventional means, for example by brushing, or preferably, by spraying.

The use of foils in the heat exchanger of the invention offers many advantages over known heat exchanger systems. In particular, sheets of metallic foil or paint are easy to apply and are relatively cheap, whilst maintaining excellent heat transmissability. Furthermore, because they can be applied as thin layers, the use of sheets of metallic foil or paint contribute to the lightweight and therefore convenient nature of the modules. In particular, they allow for the easy and convenient shaping of the modules (eg by cutting) to fit into available spaces. Thus, when the thin heat-transmissive layer of the modules of the heat exchanger of the invention are provided by metallic foils or paints, they are particularly convenient because they can be fitted into pre-existing sub-surface spaces (eg under floorboards) without the need for the manufacture of special modules or building work to modify the pre-existing sub surface space.

In a further preferred embodiment, the recess of the heat exchanger has in at least part a serpentine configuration.

The heat exchanger kit may be used for example to install an underfloor heating system or in a cooling system located for example above a ceiling.

In yet another preferred embodiment the heat exchanger kit includes at least one distribution manifold for connection to the tube and to one or more further such tubes for distributing heat exchange liquid between said tubes from a flow input to said manifold, said manifold being provided with means for coupling thereto said tubes and may optionally include a length of said plastics material tube.

In yet another preferred embodiment, the modules of the heat exchanger of the invention each comprise a layer of acoustic insulation material on the face opposite to the thermally-transmissive layer carrying face. Any acoustic insulation material may be used, for example, Gemafon (available from Sirap Gema International SA).

The method of installation may include the further step of locating in at least a portion of the continuous recess a length of tube for carrying a flow of heat exchange liquid to form a heat exchange liquid flow path between flow input and flow output ends of the installation separated by the aggregate of the communicating module channels and may include furthermore connecting the flow input and flow output ends of the tube to a heat exchange system manifold to provide a heat exchange liquid flow circuit around which the heat exchange liquid can flow.

The invention further provides a heat exchanger comprising a plurality of modules defined and installed sub-surfacially as hereinbefore described. The installed heat exchanger may include a heat exchange liquid flow manifold and/or tubes for location in at least a portion of the continuous recess for carrying a flow of heat exchange liquid. Of course, it will readily be understood that more than one heat exchanger may be connected to the manifold.

One advantage of the modular form of the heat exchanger is that it allows a person skilled in the art to quickly and easily calculate the number, type and cost of the modules required for any particular site.

Although the heat exchanger of the present invention is primarily designed to be installed as a component of an underfloor heating system, it may also be installed in a wall cavity of ceiling of a building, depending upon the particular application the heating and/or cooling system of which the heat exchanger is a component is to be put. Of course, it will be readily appreciated by those skilled in the art that the heat exchanger may be installed also in an outdoor environment, such as beneath a so-called "all weather pitch" where undersurface heating is used to prevent frost forming or to prevent snow building up on the pitch during inclement weather.

The modules of the heat exchanger can easily be cut either prefabrication or on site post-fabrication to fit particular size requirements for example in non-rectangular rooms.

The invention will now be described, by way of example only, reference being made to the accompanying drawings in which:-
Figure 1 is a side view of a section of an embodiment of the heat exchanger according to the invention;
Figure 2 is a side view of the section of Figure 1 showing sections of a tube provided to carry the heat exchange liquid and also showing comparative temperature readings;
Figure 3 is a plan view of an embodiment of the heat exchanger according to the invention installed in an underfloor heating system; and
Figure 4 is a side view of a section of an alternative embodiment of the heat exchanger according to the invention.

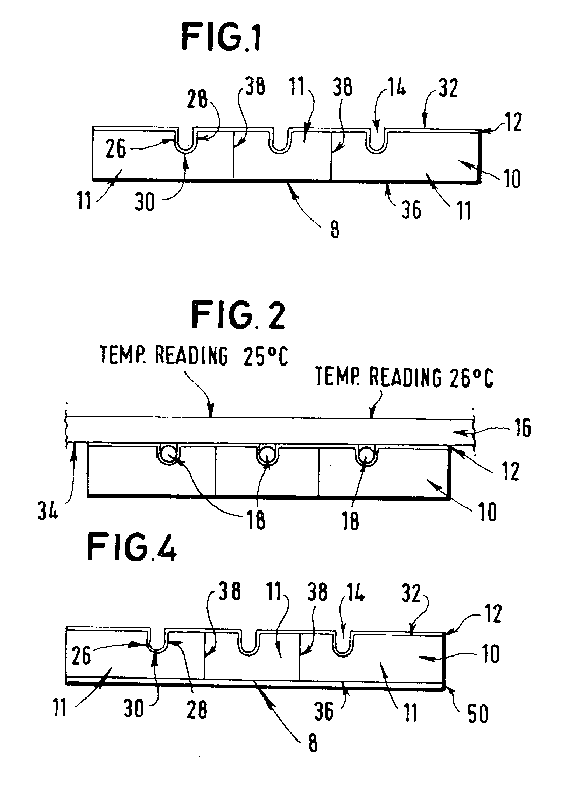

A section of a heat exchanger 8 in Figure 1 of the drawings consists of three modules 11 arranged in co-planar direct contact at respective communicating side sections 38. Each module comprises a sheet of thermal insulation material 10 formed from extruded polystyrene of 20 mm cross-sectional height, approximately 1.5m long and 1.0m wide. The insulation material 10 of each module 11 comprises a planar upwardly-facing surface 32, a substantially parallel planar downwardly-facing surface 36 and vertical side sections 38. Channels 14 are cut into the upwardly-facing surfaces 32 of the insulation material 10, each channel being approximately 14 mm deep at its deepest point and having two substantially parallel sides 26, 28 joined by an arcuate base 30 of approximately 12 mm diameter. A 3.8 x 10⁻² mm aluminium foil laminate 12 is adhered to the upwardly-facing surface 32 of the insulation material 10 and to the outer surface of the channels 14 (although the aluminium foil laminate 12 may be replaced by, for example, a layer of aluminium paint or a layer of electroplated copper).

As shown in Figure 2, the channels 14 are adapted to receive a length of plastics material pipe 18 of 10 mm internal diameter. The pipe 18 being received such that there is maximum heat transmissive contact with the foil laminate 12. The heat exchanger 8 is supported by battens attached to joists supporting the floor surface (supports and joists not shown) with the foil laminate 12 of the upwardly-facing planar surface 32 of the insulation material 10 being in substantially direct thermally transmissive contact with the downwardly-facing surface 34 of the floor material 16.

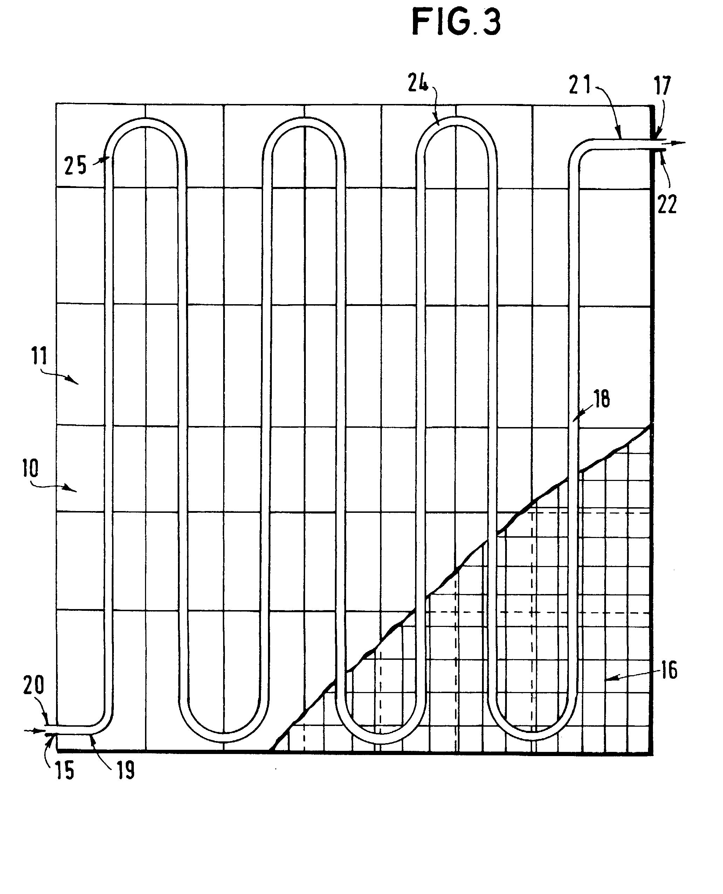

As shown in Figure 3, the modules 11 of the heat exchanger 8 are arranged in a co-planar arrangement to form a substantially continuous underfloor surface so that the main sections 25 of the channels 14 are substantially parallel and are joined by arcuate sections 24 of the channels 14 so that the main sections 25 and arcuate sections 24 communicate with each other to form a continuous circuitous recess, the continuous recess being in a serpentine configuration starting at an input point 15 and finishing at an output point 17. The plastics material pipe 18 received in channels 14 and supported thereby has a flow end section 19 connected to a flow pipe 20 which in turn is connected to a flow side of a heating manifold (not shown) and a return end section 21 connected to a return pipe 22 which in turn is connected to a return side of the heating manifold.

As shown in Figure 4, the modules 11 of the heat exchanger may have a layer of acoustic insulation material 50 (eg Gemafon, available from Sirap Gema International SA) applied to the lower surface 36 and the layer of aluminium foil may be replaced by a layer of aluminium paint 12 having a thickness of approximately 3x10⁻²mm.

Preparation and use of the heat exchanger as described in detail above will now be described in detail by way of example only with reference to the following specific Example.

### Example 1

Modules 11 of the heat exchanger 8 were laminated by hand with the 3.8 x 10⁻² mm aluminium foil laminate 12, the laminate being pre-coated on one face thereof with a layer of adhesive and applied such that the entire upwardly-facing planar surfaces 32 and the outer surfaces 26, 28, 30 of the channels 14 were laminated. Supports (not shown) were affixed to floor joists (not shown) of the experimental installation such that when the modules were supported on the supports, the upwardly-facing planar surface of the heat exchanger was arranged such that it was between 2 and 5mm proud of the upwardly-facing surfaces of the floor joists. A floor 16 was re-laid on the floor joists, the effect of which was to compress the insulating material 10 of the heat exchanger 8 and so urge the foil laminate 12 on the upwardly-facing planar surface 32 of the heat exchanger into direct contact with the downwardly-facing surface 34 of the floor 16. Comparative readings taken during the experimental installation as described above in operation (and shown in Figure 2) indicated that the temperature reading taken directly above a portion of pipe 18 was found to be 26°C and a temperature reading taken between two portions of pipe 18 was found to be 25°C.

In an alternative embodiment (not shown) pipe 18 is secured in channels 14 by a layer of thermally transmissive material applied across the channel 14 after the pipe 18 has been received therein and adhered to a short section of the foil laminate 12 on the upwardly-facing planar surface 32 on either side of each channel. The thermally transmissive material being for example an adhesive tape known in the heating and cooling profession as duct tape and available commercially from a large number of manufacturers and suppliers.

In a further embodiment, the modules 11 of the heat exchanger 8 were coated on the upper surface 32 by a layer of aluminium paint 12 (apprximately 3x10⁻²mm thick). The paint was sprayed onto the surface 32 and into the channels 14 such that the outer surfaces 26,28 and 30 were also coated. Furthermore, a layer of acoustic insulation material (Gemafon) 50 was applied to the lower surface 36 of each module 11.

## Claims

1. A heat exchanger kit 8 in modular form for installation, together with a length of a plastics material tube 18 for carrying a flow of heat exchange liquid, sub-surfacially to an enclosure-defining member of a building or beneath a ground surface, said tube 18 to be provided as a separate additional component to form a completed installation, the modules 11 of the heat exchanger 8 being in the form of sheet- or block-form self-supporting bodies of solid thermal insulation material 10 each having an upwardly-facing planar surface 32 at least the major part of which carries a thin thermally-transmissive layer 12 spread thereover, one or more channels 14 being formed in said thermally-transmissive layer carrying surface 32 for location of a portion of the length of the plastics material tube 18 in heat transfer relationship with the thermally-transmissive layer 12, the channels 18 each traversing a respective module 11 from one edge to another or from a point on one edge to a different point on the same edge and the modules 11 having generally the same thickness as each other and being configured for abutment one with another in a co-planar heat exchanger assembly in which at least the majority of the respective channels 14 communicate one with another to form a continuous recess in which the plastics material tube 18 may be received in said heat transfer relationship with the thermally-transmissive layer 12 and retained to form a heat exchange liquid flow path between flow input 15 and flow output 17 ends of the installation separated by the aggregate of the communicating module channels, the bodies of thermal insulation material 10 supporting the plastics tube without deflection of the thermally-transmissive layer carrying surface 32 in the completed installation, the thermally-transmissive layer 12 being in heat-transmissive contact with the plastics material tube 18 over substantially the entire length of the flow path and the thermally-transmissive layer 12 when the heat exchanger is installed being in thermally substantially uninterrupted direct or indirect interfacial contact with the fabric of the enclosure-defining member of the building 16 or with material of a natural or artificial ground stratum.

2. A heat exchanger kit 8 as claimed in Claim 1 wherein the solid thermal insulation material 10 is a foamed polystyrene.

3. A heat exchanger kit 8 as claimed in Claim 1 or Claim 2 wherein the thin thermally transmissive layer is a foil 12 (eg a sheet of metallic foil or a layer of metallic paint).

4. A heat exchanger kit 8 as claimed in Claim 3 wherein the metal foil 12 is an aluminium or copper foil or paint.

5. A heat exchanger kit 8 as claimed in Claim 3 or Claim 4 wherein the thin thermally-transmissive layer 12 has a thickness of between about 1 x 10⁻² mm and about 1 x 10⁻¹ mm.

6. A heat exchanger kit 8 as claimed in any preceding claim wherein the thin thermally transmissive layer 12 covers substantially all of the upwardly facing planer surfaces 32 of the modules 11.

7. A heat exchanger kit 8 as claimed in any preceding claim wherein the thin thermally-transmissive layer 12 extends into the majority of the channels 14 in the modules 11 such that the plastics material tube 18 carrying heat exchange liquid is in an overlaying relationship with the thermally-transmissive layer 12 over the majority of its passage through the modules 11.

8. A heat exchanger kit 8 as claimed in any preceding claim for use in an underfloor heating system.

9. A heat exchanger kit 8 as claimed in any of claims 1 to 7 for use in a cooling system.

10. A method of installing sub-surfacially a heat exchanger 8 in modular form, the modules 11 of the heat exchanger 8 being in the form of sheet- or block-form self-supporting bodies of solid thermal insulation material 10 each having an upwardly-facing planar surface 32 at least the major part of which carries a thin thermally-transmissive layer 12 spread thereover, one or more channels 14 being formed in said thermally-transmissive layer carrying surface 32 for location of a length of tube 18 for carrying a flow of heat exchange liquid in overlying relationship with the thermally-transmissive layer 12, said tube 18 to be provided as a separate additional component to form a completed installation, the channels 14 each traversing a respective module 11 from one edge to another or from a point on one edge to a different point on the same edge and the modules 11 having generally the same thickness as each other, the method comprising configuring the modules 11 in a co-planar heat exchanger arrangement in which at least the majority of the respective channels 14 communicate one with another to form a continuous recess in which the tube 18 may be received in overlying relationship with the thermally-transmissive layer 12 and retained to form a heat exchange liquid flow path between flow input 15 and flow output 17 ends of the installation separated by the aggregate of the communicating module channels, the bodies of thermal insulation material 10 supporting the tube 18 without deflection of the thermally-transmissive layer carrying surface 32 in the completed installation 8, the thermally-transmissive layer 12 being in heat-transmissive contact with the tube 18 over substantially the entire length of the flow path and the modules being installed such that the thermally-transmissive layer 12 is in thermally substantially uninterrupted direct or indirect interfacial contact with the fabric of a body defining the surface 16.

11. A method as claimed in Claim 10 wherein the solid thermal insulation material 10 is a foamed polystyrene.

12. A method as claimed in Claim 10 or Claim 11 wherein the thin thermally transmissive layer 12 is as claimed in any one of Claims 3 to 5.

13. A heat exchanger 8 comprising a plurality of modules 11 as defined in Claim 1 and installed sub-surfacially as there defined.

14. A heat exchanger 8 as claimed in Claim 13 which includes a heat exchange liquid flow manifold for connection to flow input 15 and flow output 17 ends of a tube 18 of at least one heat exchanger for carrying a flow of heat exchange liquid to form a heat exchange liquid flow circuit around which the heat exchange liquid can flow, said tube 18 to be provided as a separate additional component to form a completed installation 8.
